# EUROPEAN PATENT APPLICATION

(11) **EP 1 903 002 A2**
(43) Date of publication of application: **26.03.2008**
(21) Application number: 07116712.6
(22) Date of filing: 19.09.2007
(51) Int. Cl.: C01B 3/38

(54) **Process for the Partial Catalytic Oxidation of Hydrocarbons Utilising a Gas Mixing Device**

(30) Priority: 21.09.2006 US 525063
(71) Applicant: THE BOC GROUP, INC., New Providence, NJ 07974-2082 (US)
(72) Inventor: Davydov, Lev, Lyndhurst, NJ 07071 (US); Jiang, Weibin, Clinton, NJ 08809 (US); Norman, Jason Scott, Hoboken, NJ 07030 (US); Uhlman, Bruce, Mount Arlington, NJ 07856 (US)
(74) Representative: Wickham, Michael

(57) **Abstract**

In a process for the catalytic partial oxidation of hydrocarbon, hydrocarbon-containing gas and oxygen-containing gas are premixed in a gas mixing device comprising at least one eductor upstream of the catalytic partial oxidation reactor. If desired, a second eductor can be used downstream of a first eductor to effect mixing the gaseous reactants.

## Description

The present invention relates to a process for the partial catalytic oxidation of hydrocarbons utilising a gas mixing device to mix the reactants upstream of the catalytic partial oxidation reaction.

The conversion of hydrocarbons to hydrogen and carbon monoxide-containing gases is well known in the art. Examples of such processes include catalytic steam reforming, auto-thermal catalytic reforming, catalytic partial oxidation and non-catalytic partial oxidation. Each of these processes is well known and has advantages and disadvantages and produces various ratios of hydrogen and carbon monoxide together, also known as synthesis gas or syngas.

Partial oxidation is an exothermic reaction wherein a hydrocarbon gas, such as methane, and an oxygen-containing gas, such as air, is contacted with a catalyst at elevated temperatures to produce a reaction product containing high concentrations of hydrogen and carbon monoxide. The catalysts used in these processes are typically noble metals, such as platinum or rhodium, and other transition metals, such as nickel, on a suitable support.

Partial oxidation processes convert hydrocarbon-containing gases, such as natural gas, to hydrogen, carbon monoxide, and other trace components such as carbon dioxide and water. The process is typically carried out by injecting preheated hydrocarbons and an oxygen-containing gas into a combustion chamber where oxidation of the hydrocarbons occurs with less than stoichiometric amounts of oxygen for complete combustion. This reaction is conducted at very high temperatures, often in excess of 700°C and often in excess of 1,000°C, and pressures up to 150 atmospheres. In some reactions, steam or carbon dioxide can also be injected into the combustion chamber to modify the synthesis gas product and to adjust the ratio of hydrogen to carbon monoxide in the final product.

More recently, partial oxidation processes have been disclosed in which the hydrocarbon gas is contacted with an oxygen-containing gas at high space velocities in the presence of a catalyst such as a metal deposited on a ceramic foam (monolith) support. The monolith supports are impregnated with a noble metal such as platinum, palladium or rhodium, or other transition metals such as nickel, cobalt, chromium and the like. Typically, these monolith supports are prepared from solid refractory or ceramic materials such as alumina, zirconia, magnesia and the like. During operation of these reactions, the hydrocarbon feed gases and oxygen-containing gases are initially contacted with the metal catalyst at temperatures in excess of 400°C, typically in excess of 600°C, and at a standard gas hourly space velocity (GHSV) of over 100,000 per hour.

One of the requirements typically set forth for an efficiently functioning catalytic monolith reactor is the mixing of gases that enter the reactor. The complete mixture of gases assures the uniform heat transfer in the reactor as well as the uniform conversion of reactants to products. Further, the complete mixing of gases reduces the likelihood of local regions of flammable composition forming. Conventionally, such mixing is administered via mixing tees that bring together the two gas flows. More recently, static mixers, which consist of a multitude of internal vanes, have been utilized for thorough mixing of gases entering the reactor. The gas flows are merged at a t-union and then enter the static mixer and the turbulence, which is induced by the vanes of the static mixer, ensures that the reactants are completely mixed. The flow in the static mixer, however, undergoes strong impingement on the vanes of the mixer which can cause flammability hazards when gaseous fuels are mixed with oxidizers. There is a need in the art to provide a thorough mixing of the reactant gases prior to their feed to a catalytic partial oxidation reactor while avoiding the flammability hazards associated with previous mixing processes.

According to the present invention there is provided a process for the catalytic partial oxidation of hydrocarbons, wherein a feedstream of hydrocarbon-containing gases and oxygen-containing gases is fed to a catalytic partial oxidation reactor to produce hydrogen and carbon monoxide, characterised in that the hydrocarbon-containing gas stream and the oxygen-containing gas stream are mixed in a gas mixing device comprising a first eductor upstream of their being fed to the catalytic partial oxidation reactor.

Preferred features of the process according to the invention are set out in claims 2 to 13 below.

The first eductor is preferably a venturi-type eductor and has a first opening and a second opening both at opposite ends to each other and in fluid communication. The gas mixing device is also in fluid communication with the catalytic partial oxidation reactor where the gaseous feed streams that are mixed in the gas mixing device react.

In an alternative embodiment, the gas mixing device may be two gas mixing devices, both in the form of an eductor, in fluid communication with each other to ensure the adequate mixing of the input gases prior to their being fed to a catalytic partial oxidation reactor. This will significantly reduce the flammability risk by minimizing the potential of oxygen enriched areas being present. Other advantages of this arrangement of two gas mixing devices is that they can be employed in tuning the various reactant gas streams such that the proper desired ratio of carbon monoxide to hydrogen is achieved. This tuning of the ratio of carbon monoxide to hydrogen is accomplished by the addition of an inert gas into the second stage device. The first feedstream may be of a hydrocarbon-containing gas, which is typically a C₁ to C₄ alkane, and the second feedstream may be of an oxygen-containing gas, typically air. The two feedstreams are mixed in the gas mixing device and fed from the gas mixing device to the catalytic partial oxidation reactor.

The first and, if used, second eductors may both be selected from those eductor types that will provide the appropriate motive force to the gas feedstreams being mixed. For example, a jet eductor will lift, entrain and pump out a low pressure fluid utilizing a high pressure motive fluid. Other examples of eductors include gas/steam motive eductors, such as those available from Penberthy under their GL Series, liquid motive eductors, such as those available from Penberthy under their LL Series, and steam heating and mixing eductors such as those available from Penberthy under their ELL Series and CTE Series. Typically these eductors are constructed from materials such as cast-iron, steel, stainless steel, bronze, plastics and other alloy materials.

The catalytic partial oxidation reactor may contain a reduced metal catalyst. The metal catalyst employed in the present invention may consist of a ceramic monolith support structure composed of ceria coated on zirconia substrate and coated or impregnated with a transition metal or combinations thereof. The monolith support may be generally a ceramic foam-like structure formed from a single structural unit wherein the passages are disposed in either an irregular or regular pattern with spacing between adjacent passages. The single structural unit is used in place of conventional particulate or granular catalysts, which are less desirable. Examples of such irregularly patterned monolith supports include filters used for molten metals. Examples of regularly patterned supports include monolith honeycomb structures used for purifying exhausts from motor vehicles and used in various chemical processes. Preferred are the ceramic foam structures having irregular passages. Both types of monolith supports are well known and readily available commercially.

The catalyst element consists of a ceramic foam monolith composed substantially of zirconia, coated with about 15 to 20 wt. % ceria providing surface area for the metal impregnation, and contains 0.5 to about 5 wt. % noble metal, which is preferably rhodium in metallic form, and most preferably about 2 wt. % rhodium. Optionally, a transition metal, such as nickel at 2 to 4 wt. % may be used by itself or in combination with the rhodium. The reactor can also contain several ceramic foam disks including those with catalyst impregnated on them and with blanks to fill the void space. The blanks may be made of alumina, zirconia, cordierite or mixtures thereof. The blanks may be spaced and sized according to their effect on flow distributions and the desired final mixing step.

Optionally, the reduced metal catalyst consists of a transition metal selected from the group consisting of nickel, cobalt, iron, platinum, palladium, iridium, rhenium, ruthenium, rhodium, osmium and combinations thereof all supported on or in a ceria-coated zirconia monolith support.

The gas feedstreams that are mixed in the gas mixing device are fed to the reactor at pressures of between about 1 to about 30 atmospheres. They also may be fed at a standard gas hourly space velocity of about 50,000 to about 500,000 per hour and typically at temperatures greater than 100°C.

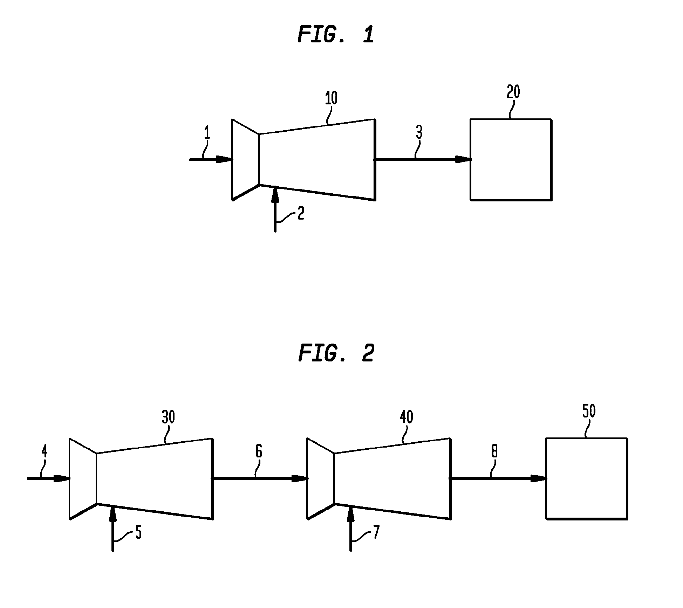

The process according to the invention will now be described by way of example with reference to the accompanying drawings, in which Figure 1 is a schematic representation of one embodiment of a first plant for performing the process according to the present invention showing the gas mixing means and the catalytic partial oxidation reactor.

Figure 2 is a schematic representation of a second plant for performing the process according to the present invention showing two gas mixing means in communication upstream of entry of the gas mix into a catalytic partial oxidation reactor.

Referring to Figure 1 a gas mixing device 10 in the form of an eductor is in fluid communication with a catalytic partial oxidation reactor 20. A hydrocarbon gas is fed into line 1. The hydrocarbon gas may be a C₁ to C₄ alkane, preferably methane, and can be present along with an inert gas such as nitrogen, carbon dioxide, argon, helium or steam. The oxygen-containing gas is fed through line 2. The oxygen-containing gas can be any mixture which contains oxygen in a percentage to allow oxidation to occur. The tunability of the catalytic partial oxidation process depends in part on the amount of oxygen present in the reaction and accordingly, this can be adjusted by feeding air or pure oxygen into line 2. Alternatively, the hydrocarbon gas may be fed through line 2 while the oxygen-containing gas is fed through line 1. Mixing occurs within the gas mixing device 10 and the mixed feedstreams exits through line 3 and enter the reactor 20 wherein catalytic partial oxidation occurs to produce a gas mixture of hydrogen, carbon dioxide, water vapour and carbon monoxide.

Referring now to Figure 2 a second gas mixing means in the form of an eductor 40 is positioned downstream of a first gas mixing means in the form of an eductor 30. A secondary eductor 40 is used when the use of a single eductor would result in the flammability envelope being undesirably widened in a single reactor. The hydrocarbon-containing gas is fed from line 4 into the first gas mixing means 30. The oxidizer or oxygen-containing gas may be fed in part or in whole to line 5 to the gas mixing means 30. Depending upon how the issue of flammability is to be dealt with, the oxygen-containing gas flowing into line 5 can be the full amount necessary for the catalytic partial oxidation reaction or it can be in part split between line 5 and line 7, the latter line feeding the second gas mixing means 40. When all the oxygen-containing gas is fed to line 5 and first gas mixing means 30, an inert gas such as nitrogen, carbon dioxide or steam may be fed through line 7 to help arrest the flammability envelope. The mixed gas feedstreams will exit the first gas mixing device through line 6 and enter the second gas mixing means 40. The sum of all gases now fed into the system whether it is the hydrocarbon-containing gas, an oxygen-containing mixture, or the hydrocarbon-containing gas, oxygen-containing gas and inert gas are mixed thoroughly in the second mixing means 40 and will exit through line 8 where they are fed to the catalytic partial oxidation reactor 50 wherein catalytic partial oxidation of the gas feedstream mixtures occurs to produce a gas rich in hydrogen and carbon monoxide.

In order to illustrate the workability of the present invention, computer flow dynamic (CFD) simulations were conducted. CFD modelling was used to evaluate the geometry and size of mixing devices, for example, mixing tees, static mixers and eductors, in the creation of a fully mixed flow out of two or more individual flows.

The modelling was done through the numerical solution of the Navier-Stokes equation using finite volume or finite element schemes for the meshed domain. The velocity value and direction were calculated and the species concentration was balanced for each cell (or node) of the mesh. The following information was used for the calculations, which were based on a catalytic partial oxidation reactor employing a monolith catalyst: velocity fields in the computational domain and concentration profiles of various species in the mixing device and the pipework following the mixing device.

Velocity fields provide an insight into the flow patterns including presence of any back flow, channelling, stagnation zone(s), dispersion and deviation from ideal flows. These fields can be generated for the whole domain where fluid motion takes place. The velocity field can be represented by velocity contours as well as velocity vectors. Graphs are used in designing the mixing device of the present invention. Longitudinal velocity profiles and vectors can identify the areas of turbulence, flow short-circuiting and stagnation. Given this information, changes in the equipment selection are introduced to optimize the turbulence of the fluid flow inside the mixing device, especially in the mixing areas. The knowledge of the flowfield inside the mixing device also allows a comparison to be made of the local gas velocities with sonic velocity at the identical conditions to assure the long-term integrity of the mixing device. Similar comparison with the flame velocity can aid in the assessment of local flammability.

Yet another important component of CFD modelling is species transport. The uniform distribution of the species in the outgoing flow is the ultimate measure of the mixing efficiency for a particular mixing device. The convective (as well as molecular) and turbulent diffusion of species takes place when two or more components are mixed. The typical output of species modelling is generated in the form of concentration profiles. Cross sectional and longitudinal concentration profiles help to assure the adequate mixing of components inside the equipment and introduce changes into the equipment design and size should the mixing be inadequate.

CFD simulations can be run in an unsteady state mode when the assessment of transient processes (including reactor start-up and shutdown) is required. Such analysis allows for modelling flammable pocket formation in real time (should such formation take place). It also facilitates in the determination of the optimal flow arrangement for the mixing device.

Three generic configurations were considered: a mixing tee, static mixer, and an eductor. As the gases that are employed in the catalytic partial oxidation process mix inside these three fixtures, a certain fraction of the gas can attain a flammable concentration. When a mixing tee is used, the pocket of flammable gas propagates co-currently with the flow direction. Should a spark occur somewhere in the system, such arrangement can lead to flame propagation. When a static mixer is used, the pocket of flammable gas repeatedly hits the internal vanes of the static mixer perpendicular to the flow. This condition can create local overheating of the gas where it impinges on the vanes and can serve as ignition sources and cause the flame to propagate. The above observed phenomena were not noticed when an eductor is utilized for the gas mixing means. The use of an eductor leads to the smallest of the three non-propagating flammable regions during mixing of the gases, thus lessening the hazards associated with synthesis gas production. Furthermore, the area of highest velocity of gas inside the eductor is contained by the thickest walls which provide for additional safety if an ignition source emerges. The highest velocity is also a critical parameter in ensuring that the gas velocity is greater than the flame velocity.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true scope of the present invention.

## Claims

1. A process for the catalytic partial oxidation of hydrocarbons, wherein a feedstream of hydrocarbon-containing gases and oxygen-containing gases is fed to a catalytic partial oxidation reactor to produce hydrogen and carbon monoxide, **characterised in that** the hydrocarbon-containing gas stream and the oxygen-containing gas stream are mixed in a gas mixing device comprising a first eductor upstream of their being fed to the catalytic partial oxidation reactor.

2. A process as claimed in claim 1, wherein said first eductor is selected from the group consisting of venturi-type eductors, gas/steam motive eductors, liquid motive eductors and steam heating and mixing eductors.

3. A process as claimed in claim 2, wherein said first eductor comprises a first opening at one end in fluid communication with a second opening at the opposite end of said gas mixing device.

4. A process as claimed in claim 2 or claim 3, wherein said gas mixing device is fluidly connected to a second eductor.

5. A process as claimed in any one of claims 1 to 3, wherein said gas mixing device is fluidly connected to said reactor.

6. A process as claimed in any one of the preceding claims, wherein the hydrocarbon-containing and oxygen-containing gases feedstreams are fed to said reactor at a pressure of between 1 and 30 atmospheres.

7. A process as claimed in any one of the preceding claims. wherein the feedstreams is fed to said reactor at a standard gas hourly space velocity of about 50,000 to about 500,000 per hour.

8. A process as claimed in any one of the preceding claims, wherein the temperature of said mixed feedstream is greater than 100°C.

9. A process as claimed in any one of the preceding claims, wherein the reactor contains a reduced metal catalyst which consists essentially of a transition metal selected from the group consisting of nickel, cobalt, iron, platinum, palladium, iridium, rhenium, ruthenium, rhodium, osmium and combinations thereof supported on or in a ceria-coated zirconia monolith support.

10. A process as claimed in claim 11, wherein said ceria-coated zirconia monolith support is about 5% to about 30% ceria by weight.

11. A process as claimed in claim 11, wherein said transition metal is selected from the group consisting of rhodium and nickel.
